(19) **Europäisches Patentamt**

**European Patent Office**

**Office européen des brevets**

(11) **EP 0 663 755 B1**

(12) **EUROPÄISCHE PATENTSCHRIFT**

(45) Veröffentlichungstag und Bekanntmachung des Hinweises auf die Patenterteilung:
**30.07.2003 Patentblatt 2003/31**

(51) Int Cl.⁷: **H04M 19/00**

(21) Anmeldenummer: **94120873.8**

(22) Anmeldetag: **28.12.1994**

(54) **Schaltungsanordnung zur Speisung einer Teilnehmeranschlussleitung**

Circuit arrangement for feeding a subscriber line

Agencement de circuit pour l'alimentation d'une ligne d'abonné

(84) Benannte Vertragsstaaten:
**AT BE CH DE DK ES FR GB GR IE IT LI LU NL PT SE**

(30) Priorität: **17.01.1994 DE 4401174**

(43) Veröffentlichungstag der Anmeldung:
**19.07.1995 Patentblatt 1995/29**

(73) Patentinhaber: **Infineon Technologies AG**
**81669 München (DE)**

(72) Erfinder:
• **Gazsi, Dr. Ing. Lajos**
**D-40239 Düsseldorf (DE)**
• **Astegher, Dipl.-Ing. Berthold**
**A-9020 Klagenfurt (AT)**
• **Zojer, Dipl.-Ing. Herbert**
**A-9640 Kötschach (AT)**
• **Czetina, Dipl.-Ing. Robert**
**A-9500 Villach (AT)**
• **Reisinger, Dipl.-Ing. Jochen**
**A-9500 Villach (AT)**

(74) Vertreter: **Reinhard - Skuhra - Weise & Partner**
**Postfach 44 01 51**
**80750 München (DE)**

(56) Entgegenhaltungen:
**EP-A- 0 446 944     EP-A- 0 559 336**
**WO-A-93/21724**

• **PATENT ABSTRACTS OF JAPAN vol. 8, no. 194 (E-264) 6. September 1984 & JP-A-59 083 452 (FUJITSU KK) 14. Mai 1984**
• **PATENT ABSTRACTS OF JAPAN vol. 10, no. 386 (E-467) 24. Dezember 1986 & JP-A-61 176 248 (HITACHI LTD) 7. August 1986**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Schaltungsanordnung zur Speisung einer Teilnehmer-Anschlußleitung, wie z.B. aus der EP 0 446 944 A2 bekannt.

In der Fernmeldetechnik werden üblicherweise Endgeräte über analoge Teilnehmer-Anschlußleitungen an spezielle Schnittstellenschaltungen angeschlossen. Eine derartige Schnittstellenschaltung, auch Subscriber Line Interface Circuit (SLIC) genannt, versorgt unter anderem die Teilnehmer-Anschlußleitung mit einer Leitungsspannung $V_L$ und einem Leitungsstrom $I_L$ bei einer beliebigen Leitungsimpedanz. Diese Leitungsimpedanz stellt für Gleichstrom einen ohm'schen Widerstand $R_L$ dar.

Bekannte Schnittstellenschaltungen, wie beispielsweise der Baustein Am 7950 SLIC der Firma AMD, ist mit einem Spannungsregler gekoppelt, der mit hohem Wirkungsgrad aus einer Batteriespannung $V_{BN}$ eine Versorgungsspannung $V_B$ erzeugt. Dabei wird die Versorgungsspannung $V_B$ abhängig von einem Spannungswert $V_{FBK}$, der dem Spannungsregler von der Schnittstellenschaltung zugeführt wird, geregelt. Der Spannungswert $V_{FBK}$ beinhaltet Informationen darüber, welche elektrischen Zustände in der Teilnehmer-Anschlußleitung gerade vorherrschen.

Findet beispielsweise bei dem an die Teilnehmer-Anschlußleitung angeschlossenen Endgerät ein Wählvorgang statt, so bedeutet dies für die Teilnehmer-Anschlußleitung ein fortlaufendes Umschalten zwischen dem Zustand einer offenen und dem Zustand einer geschlossenen Leitung, was sich in starken Schwankungen des Lastwiderstandes $R_L$ äußert.

Üblicherweise wird daher in den Rückkopplungszweig der Schnittstellenschaltung ein Integrationsglied mit gegeoener Zeitkonstante gesetzt. Dadurch wird erreicht, daß der Spannungsregler unempfindlicher gegenüber durch Lastschwankungen hervorgerufenen Leitungsspannungsänderungen reagiert. Es hat sich jedoch gezeigt, daß mit den herkömmlichen Spannungsreglern alleine der Schnittstellenschaltung eine höhere Versorgungsspannung $V_B$ zugeführt wird, als zum Aufrechterhalten der Leitungsspannung $V_L$ und des Leitungsstroms $I_L$ bei einem gegebenen Lastwiderstand $R_L$ notwendig ist. Insbesondere weist bei einer an eine Teilnehmer-Anschlußleitung angeschlossenen Schnittstellenschaltung die Leitungsstrom-/Leitungsspannungscharakteristik einen ersten Abschnitt mit einem konstanten Strom, der gleich dem Leitungsspitzenstrom $I_{LIM}$ ist, anschließend einen zweiten Abschnitt mit einem Gradienten von $I/R_{DC}$, wobei $R_{DC}$ der Innenwiderstand der Schnittstellenschaltung ist, und einen dritten Abschnitt mit einem Gradienten $n/R_{DC}$ auf, wobei n eine positive ganze Zahl ist. Schließlich folgt ein vierter Abschnitt, der vom Berührungspunkt des Gradienten $n/R_{DC}$ mit der Abszisse bis zu einer Spannung gleich der Versorgungsspannung $V_B$ reicht und bei dem der Leitungsstrom $I_L$ gleich Null ist. Die Länge des vierten Abschnitts ist gleich einer Spannung $V_{DROP}$, die wiederum gleich der Differenz zwischen der Versorgungsspannung $V_B$ und einer maximal erreichbaren Leitungsspannung $V_L$ ist.

Untersuchungen haben nun gezeigt, daß im Falle des Absinkens der Versorgungsspannung $V_B$ der Abschnitt mit konstantem Strom $I_{LIM}$ und der Abschnitt mit dem Gradienten $I/R_{DC}$ bestehen bleiben, jedoch die übrigen Abschnitte parallel verschoben werden.

Wird nun die Schnittstellenschaltung mit einer sogenannten optimalen Versorgungsspannung $V_{BF}$ betrieben, während bei gegebenem Lastwiderstand $R_L$ Leitungsspannung $V_L$ und Leitungsstrom $I_L$ beibehalten werden, so ist die Verlustleistung der Schnittstellenschaltung minimal.

Aus der EP-A 0 269 579 ist eine Schnittstellenschaltung bekannt, die einen Spannungsregler zur Erzeugung der Versorgungsspannung $V_B$ enthält. Mit der Versorgungsspannung $V_B$ wird eine Teilnehmer-Anschlußleitung gespeist, auf der sich abhängig von dem gegebenen Lastwiderstand $R_L$ der Leitungsstrom $I_L$ und die Leitungsspannung $V_L$ einstellen. Außerdem weist die Schnittstellenschaltung eine Kontrollschaltung auf, die, ausgehend von geeigneten Spannungen und Strömen der Schnittstellenschaltung, eine Spannung $V_{FBK}$ erzeugt. Die Spannung $V_{FBK}$ ist gleich der Differenz zwischen der optimalen Versorgungsspannung $V_{BF}$ und der Versorgungsspannung $V_B$. Die Kontrollschaltung minimiert die dem Spannungsregler zugeführte Spannung $V_{FBK}$ entsprechend den Schwankungen des Lastwiderstandes $R_L$.

Bei der Realisierung dieser Regelschaltung mit Kontrollschaltung und Spannungsregler sind insbesondere zahlreiche Differenzverstärker, Stromquellen, Stromspiegel, Multiplizierer und Widerstände notwendig. Einige dieser Schaltelemente sind für bestimmende Schaltungseigenschaften maßgebend und zudem größtenteils auch temperaturabhängig, wodurch insbesondere bei einer Realisierung in integrierter Technik zusätzliche Abgleich- bzw. Kompensationsmaßnahmen erforderlich sind. Diese erhöhen den ohnehin hohen Schaltungsaufwand. Darüber hinaus sind deren Betriebsparameter von Spannungs-, Strom- und Widerstandswerten abhängig, deren Einstellung schwierig handzuhaben und meistens mit zusätzlichem Aufwand verbunden ist.

Aufgabe der Erfindung ist es daher, eine Schaltungsanordnung zur Speisung einer Teilnehmer-Anschlußleitung anzugeben, die eine geringe Verlustleistung der Schnittstellenschaltung erzielt und die die oben genannten Nachteile nicht aufweist.

Die Aufgabe wird durch eine Schaltungsanordnung gemäß Patentanspruch 1 gelöst. Ausgestaltungen und Weiterbildungen des Erfindungsgedankens sind Gegenstand von den abhängigen Ansprüchen.

Die Erfindung wird nachfolgend anhand der in den Figuren der Zeichnung dargestellten Ausführungsbeispiele näher erläutert. Es zeigt:

Figur 1     eine allgemeine Ausführungsform einer erfindungsgemäßen Schaltungsanordnung,

Figur 2     eine Leitungsstrom-/Leitungsspannungscharakteristik einer erfindungsgemäßen Schaltungsanordnung nach Figur 1,

Figur 3     eine erste Ausführungsform einer Funktions-einheit bei einer erfindungsgemäßen Schal-tungsanordnung und

Figur 4     eine zweite Ausführungsform einer Funktionseinheit bei einer erfindungsgemäßen Schaltungsanordnung.

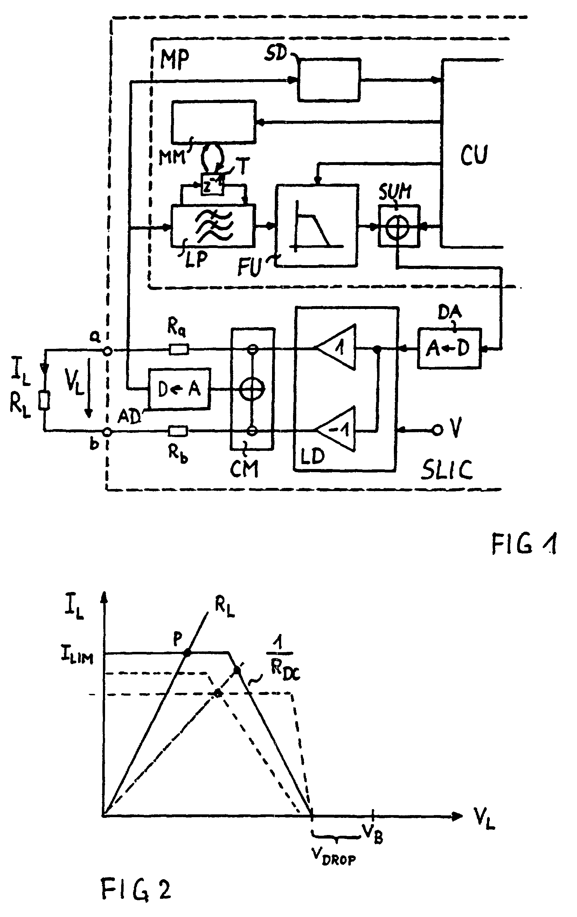

Bei dem Ausführungsbeispiel nach Figur 1 ist eine erfindungsgemäße Schnittstellenschaltung SLIC an eine Teilnehmer-Anschlußleitung, die zwei Leitungsadern a und b hat, angeschlossen. Die Leitungsimpedanz und die Impedanz eines an die Teilnehmer-Anschlußleitung angeschlossenen Endgerätes sind zu einer Lastimpedanz zusammengefaßt, die für Gleichstrom als ohm'scher Lastwiderstand $R_L$ beschrieben werden kann. Zwischen den Adern a und b tritt eine Leitungsspannung $V_L$ auf und es fließt ein Leitungsstrom $I_L$. Innerhalb der Schnittstellenschaltung SLIC ist eine Strommeßeinrichtung CM mit der Teilnehmer-Anschlußleitung gekoppelt, die den Leitungsstrom $I_L$ ermittelt. Die Kopplung mit den Adern a und b der Teilnehmer-Anschlußleitung erfolgt dabei jeweils über Schutzwider-stände $R_a$ und $R_b$, die für die Funktion der Schnittstellenschaltung selbst ohne Bedeutung sind und daher für die weiteren Betrachtungen als Teil des Lastwiderstandes $R_L$ angesehen werden.

Bevorzugt mißt dabei die Strommeßeinrichtung CM sowohl den in die Teilnehmer-Anschlußleitung fließenden Strom als auch den zurückfließenden Strom. Damit kann zwischen einem im Normalfall auftretenden transversalen Leitungsstrom und beispielsweise einem bei gedrückter Erdungstaste am Endgerät auftretenden longitudinalen Leitungsstrom unterschieden werden. Für die weiteren Betrachtungen wird jedoch ausschließlich von einem transversalen Leitungsstrom $I_L$ ausgegangen.

Zur Ermittlung des transversalen Leitungsstroms $I_L$ werden hinund zurückfließender Leitungsstrom miteinander addiert. Bei longitudinalem Leitungsstrom würden dagegen beide voneinander subtrahiert werden. Anschließend wird der ermittelte analoge Wert mit Hilfe einer Analog-Digital-Wandlereinheit AD in einen entsprechenden digitalen Wert umgesetzt. Es besteht natürlich auch die Möglichkeit, hin- und zurückfließenden Leitungsstrom getrennt umzusetzen und die Addition (bzw. Subtraktion) auf digitaler Seite vorzunehmen.

Die Analog-Digital-Wandlereinheit AD besteht dabei beispielsweise aus einem analogen Tiefpaßfilter zur Begrenzung der Bandbreite des von der Strommeßeinrichtung CM zuge führten Signals, aus einem überabtastenden Analog-Digital-Umsetzer und aus einer Abtastraten-Reduziereinrichtung.

Der Analog-Digital-Wandlereinheit AD ist ein digitales Tiefpaßfilter LP zur Glättung des gemessenen Leitungstroms $I_L$ nachgeschaltet, das eine niedrigere Grenzfrequenz von beispielsweise 0,3 Hz aufweist.

Es folgt eine Funktionseinheit FU, die aus ei-ner dem Leitungsstrom proportionalen, tiefpaßgefilter-ten Eingangsgröße entsprechend einer vorgegebenen Abhängigkeit eine Ausgangsgröße bildet. Diese Ausgangsgröße wird einer Digital-Analog-Wandlereinheit DA zugeführt, die eine dazu proportionale Spannung erzeugt. Die Digital-Analog-Wandlereinheit DA besteht dabei beispielsweise aus einer Abtastraten-Erhöhungseinrichtung, einem überabtastenden Digital-Analog-Umsetzer sowie einem nachgeschalteten analogen Tiefpaßfilter.

Zwischen Funktionseinheit FU und Digital-Analog-Wandlereinheit DA ist ein Summierer SUM geschaltet, dem zudem ein Wechselstromsignal zugeführt wird. Dabei handelt es sich beispielsweise um ein Ruftonsignal und/oder ein Gebührenimpulssignal.

Desweiteren ist zwischen die Digital-Analog-Wandlereinhei DA und die Teilnehmer-Anschlußleitung eine Leitungstreiberstufe LD geschaltet. Diese ist symmetrisch ausgeführt und weist zwei Endstufen auf, die in Brückenschaltung betrieben werden. Das bedeutet, daß eine Endstufe als invertierender und die andere Endstufe als nichtinvertierender Verstärker geschaltet ist, wobei die Ausgänge beider Endstufen mit jeweils einer Ader a bzw. b der Teilnehmer-Anschlußleitung verbunden sind. Der Vorteil der Brückenschaltung liegt zum einen darin, daß die Versorgungsspannung der Leitungstreiberstufe LD annähernd nur halb so groß sein muß, als bei Verwendung nur einer Endstufe und zum anderen, daß durch den symmetrischen Aufbau Störungen, wie insbesondere ein Ubersprechen auf andere Leitungen, weitestgehend unterdrückt werden.

Weiterhin enthält die Schnittstellenschaltung SLIC einen Signalisierungsdetektor SD, der beispielsweise erkennt, daß nach Aussenden eines Ruftonsignals beim Endgerät der Hörer abgenommen wird oder daß der Hörer wieder aufgelegt wird. Den jeweils erkannten Zustand zeigt der Signalisierungsdetektor SD einer im weiteren nicht näher beschriebenen Steuereinrichtung CU an, die aus diesen Informationen bestimmte Steuersignale ableitet.

Mit einem derartigen Steuersignal wird in Weiterbildung der Erfindung eine Speichereinheit MM gesteuert, die bei Auftreten dieses Steuersignals aktuelle Zustandsvariable des digitalen Tiefpaßfilters LP übernimmt und in ihr abgelegte Zustandvariable in das digitale Tiefpaßfilter LP lädt. Eine Zustandsvariable eines digitalen Filters ist durch den Inhalt eines oder mehrerer Speicherelemente bzw. Verzögerungselemente gegeben. Im vorliegenden Ausführungsbeispiel handelt es sich um ein Tiefpaßfilter erster Ordnung. Es enthält daher lediglich ein einziges Verzögerungselement T, dessen Inhalt den Zustand des Filters bestimmt.

Das Rufsignal für das Endgerät setzt sich zum einen aus einer Wechselspannung, nämlich dem Ruftonsignal, und einer Gleichspannung zusammen, die einander überlagert werden. Solange beim Endgerät der Hörer nicht abgenommen wird, fließt aufgrund der Wechselstromkopplung der Klingel im Endgerät kein Gleichstrom. Wird nun der Hörer abgenommen, so liegt parallel zur Klingel der gleichstromgekoppelte Hör- und Sprechkreis des Endgerätes. Es fließt daher ein Gleichstrom, der von dem Signalisierungsdetektor SD erkannt und an die Steuereinrichtung CU gemeldet wird. Daraufhin schaltet die Steuereinrichtung CU das Ruftonsignal, das sie im übrigen selbst digital erzeugt, ab und erhöht die Gleichspannung zur Versorgung des Endgerätes.

Die relativ niedrige Grenzfrequenz des digitalen Tiefpaßfilters LP, die für eine hohe Stabilität der gesamten Schaltungsanordnung von Bedeutung ist, hat jedoch eine lange Einschwingzeit zur Folge, wodurch nach dem Ändern der Speisecharakteristik eine relativ lange Zeit verstreicht, bis wieder ein stationärer Zustand erreicht wird.

Beim Ändern der Speisecharakteristik wird nun der Zustand des digitalen Tiefpaßfilters LP für die noch aktuelle Speisecharakteristik in die Speichereinheit MM übernommen und ein der neuen Speisecharakteristik entsprechender, bereits zu einem früheren Zeitpunkt eingespeicherter Zustand in das digitale Tiefpaßfilter LP geladen. Die Einschwingzeit wird somit fast auf Null reduziert, da nach einer ersten Inbetriebnahme der gesamten Schaltungsanordnung, in der sich die jeweiligen Zustände einregeln und in der die Zustände in die Speichereinheit übernommen werden, diese weitestgehend konstant bleiben, da sich die Eigenschaften der Teilnehmer-Anschlußleitung und des daran angeschlossenen Endgerätes in der Regel sehr selten ändern. Daher treten lange Einschwingzeiten nur nach Änderungen, also sehr selten, auf.

Die Änderung der Speisecharakteristik erfolgt unter Steuerung der Steuereinrichtung CU. Diese ändert in der Funktionseinheit FU die Abhängigkeit der Ausgangsgröße von der Eingangsgröße. Gemäß dieser Abhängigkeit wird aus dem gemessenen Leitungsstrom $I_L$ als Eingangsgröße eine Ausgangsgröße erzeugt, die die Ausgangsspannung der Schnittstellenschaltung SLIC und damit die Leitungsspannung $V_L$ festlegt. Die Abhängigkeit der Ausgangsgröße von der Eingangsgröße ist über die Steuereinrichtung CU auch von außen änderbar, wodurch eine Anpassung an die unterschiedlichen Bestimmungen verschiedener Länder leicht, beispielsweise maschinell unter Software-Steuerung, vorgenommen werden kann.

Bevorzugt sind die wesentlichen Schaltungsteile, wie digitales Tiefpaßfilter LP, Funktionseinheit FU, Summierer SUM, Speichereinheit MM, Signalisierungsdetektor SD sowie Steuereinrichtung CU in einen Mikroprozessor MP implementiert. Darüber hinaus ist es natürlich auch möglich, weitere Schaltungsteile, wie beispielsweise die Analog-Digital-Wandlereinheit AD und die Digital-Analog-Wandlereinheit DA in den Mikroprozesser MP zudem aufzunehmen. Der Vorteil dabei ist, daß zum einen eine Verwendung des Mikroprozessors MP bei weiteren Aufgaben, beispielsweise bei der Auswertung und der Erzeugung der Ruftonsignale, eingesetzt werden kann, womit eine hohe Auslastung vorhandener Schaltungskapazität erzielt wird und zum anderen beliebige Änderungen, wie beispielsweise der Abhängigkeiten bei der Funktionseinheit FU, als einfache Software-Änderungen durchgeführt werden können.

Um schließlich den Mikroprozessor MP in nur geringem Maße mit Aufgaben im Hochvoltbereich, d. h. mit der Gleichspannungsregelung, der Ruftonsignalerzeugung sowie der Signalisierungsdetektion zu belasten, wird die Abtastfrequenz hierbei gegenüber der zur Abtastung von Sprachsignalen notwendigen Abtastfrequenz um einen bestimmten Faktor, beispielsweise um den Faktor 4, herabgesetzt.

Eine bevorzugte Leitungsstrom-/Leitungsspannungscharakteristik ist in Figur 2 der Zeichnung dargestellt. In einem ersten Abschnitt wird bei kleineren Leitungsspannungen $V_L$ der Leitungsstrom $I_L$ konstant auf einem maximalen Leitungsstrom $I_{LIM}$ gehalten. Dieser Abschnitt geht in einen zweiten Abschnitt über, in dem der Leitungsstrom $I_L$ für mittlere Leitungsspannungen $V_L$ proportional zum Kehrwert des Gleichstrom-Innenwiderstandes $R_{DC}$ der Schnittstellenschaltung ist und die Abszisse in einem Punkt schneidet, der um den Spannungswert $V_{DROP}$ von der Versorgungsspannung $V_B$ entfernt ist. In diesem Bereich, dem Abschnitt 3, zwischen $V_B$ und $V_B$-$V_{DROP}$ ist der Leitungsstrom $I_L$ gleich Null.

Für einen gegebenen Lastwiderstand $R_L$ stellt sich ein Arbeitspunkt P ein, der sich aus dem Schnittpunkt der Kennlinien der Schnittstellenschaltung und des Lastwiderstandes $R_L$ in der Leitungsstrom-/Leitungsspannungscharakteristik ergibt. Wobei, wie in Figur 2 strichpunktiert dargestellt ist, unterschiedliche Lastwiderstände und unterschiedliche Speisecharakteristiken unterschiedliche Arbeitspunkte ergeben.

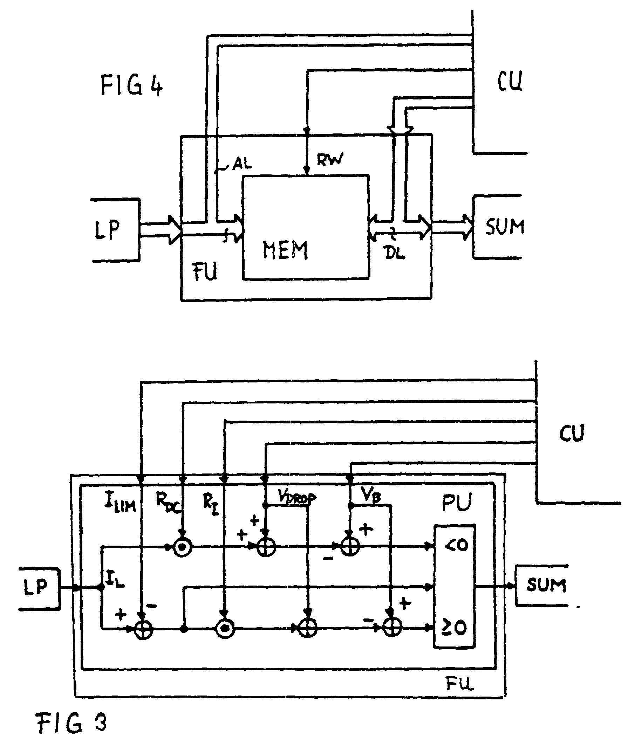

Gemäß Figur 3 kann die Einstellung der Leitungsstrom-/Leitungsspannungscharakteristik nach Figur 2 anhand von Parametern erfolgen. Dazu werden der Funktionseinheit FU durch die Steuereinrichtung CU jeweils dem Innenwiderstand $R_{DC}$ der Schnittstellenschaltung, dem maximal zulässigen Leitungsstrom $I_{LIM}$, dem Spannungswert $V_{DROP}$ sowie der Versorgungsspannung $V_B$ proportionale Größen zugeführt, wobei die Versorgungsspannung $V_B$ bei der erfindungsgemäßen Schaltungsanordnung immer gleich der optimalen Versorgungsspannung $V_{BF}$ ist.

Die Verknüpfung der von der Steuereinrichtung CU übergebenen Parameter, den von dem digitalen Tiefpaßfilter LP übergebenen Eingangsgrößen und den an den Summierer weitergeleiteten Ausgangsgrößen in der Funktionseinheit FU kann etwa durch eine Recheneinheit PU (oder bei Implementierung in einen Mikroprozessor MP auch beispielsweise in einem Unterprogramm) oder Programmteil folgende Berechnungen durchgeführt werden:

$$V_L = V_B - V_{DROP} - I_L * R_{DC} \text{ für } I_L - I_{LIM} < 0$$

und

$$V_L = V_B - V_{DROP} - (I_L - I_{LIM}) * R_I \text{ für } I_L - I_{LIM} \geq 0$$

Der Wert $R_I$ steht dabei für einen angenommenen Innenwiderstand einer Stromquelle, wobei $R_I$ wesentlich größer gewählt wird, als der Gleichstrom-Innenwiderstand $R_{DC}$ (für Spannungsquellenbetrieb). Alle aufgeführten Werte bei der Berechnung sind als zu den jeweiligen Größen proportional und mit einem Proportionalitätsfaktor behaftet anzusehen. Die einzelnen Proportionalitätsfaktoren wurden zwecks größerer Übersichtlichkeit bei den oben genannten Gleichungen gleich 1 setzt.

Neben der Berechnung anhand von Parametern kann auch, wie in Figur 4 gezeigt, die Funktionseinheit FU im wesentlichen als Speicher MEM ausgebildet werden, wobei die vom digitalen Tiefpaßfilter LP zugeführte Eingangsgröße, nämlich der Leitungsstrom $I_L$, als Adresse verwendet wird, unter der im Speicher eine bestimmte Ausgangsgröße abgelegt ist. In diesem Fall sind Adreßleitungen AL des Speicher MEM an das digitale Tiefpaßfilter LP angeschlossen und Datenleitungen DL mit dem Summierer SUM verbunden. Außerdem sind die Adreßleitungen AL und die Datenleitungen DL sowie eine Signalleitung RW für Schreib-/Lesesignale an die Steuereinrichtung CU angeschlossen. Durch die Steuereinrichtung CU können bei Ausgabe eines Schreibsignals die Speicherinhalte beispielsweise während einer Initialisierungsphase eingelesen werden und dort bis zu einer eventuell vorzunehmenden Änderung verbleiben. Damit läßt sich jede beliebige Charakteristik auf einfache Weise erzeugen.

Die Speisung des Leitungstreibers LD erfolgt mit einer Batteriespannung $V_{BN}$. Bei Schwankungen der Batteriespannung $V_{BN}$ kann die Speisecharakteristik zudem nachgeregelt werden und zwar zum einen dadurch, daß im Leitungstreiber LD selbst die Speisecharakteristik um den Betrag der Schwankung durch entsprechende Addition bzw. Subtraktion verschoben wird oder zum anderen dadurch, daß die Batteriespannung $V_{BN}$ über eine weitere Analog-Digital-Wandlereinheit der Funktionseinheit FU zugeführt wird und beispielsweise die Versorgungsspannung $V_B$ gleich der gemessenen Batteriespannung $V_{BN}$ gesetzt wird.

Abschließend sei bemerkt, daß die Schnittstellenschaltung SLIC noch weitere Schaltungsteile aufweist, die jedoch, da sie für die Gleichstromregelung selbst nicht unmittelbar von Bedeutung sind, der Übersichtlichkeit halber weggelassen wurden.

**Patentansprüche**

1. Schaltungsanordnung zur Speisung einer Teilnehmer-Anschlußleitung mit einer Spannung ($V_L$)

   - mit einer Digital-Analog-Wandlereinheit (DA), deren Ausgang mit der Teilnehmer-Anschlußleitung (a,b) gekoppelt ist,
   - mit einer Strommeßeinrichtung (CM) zur Messung des in der Teilnehmeranschlußleitung (a, b) fließenden Stromes ($I_L$),
   - mit einer Analog-Digital-Wandlereinheit(AD), die der Strommeßeinrichtung (CM) nachgeschaltet ist,
   - mit einem digitalen Tiefpaßfilter (LP), das an den Ausgang der Analog-Digital-Wandlereinheit (AD) angeschlossen ist,
   - mit einer digitalen Funktionseinheit (FU), die aus einer aus dem gemessenen Strom ($I_L$) abgeleiteten Eingangsgröße entsprechend einer vorgegebenen Abhängigkeit eine Ausgangsgröße zur Festlegung der Spannung ($V_L$) bildet, wobei die Funktionseinheit (FU) eingangsseitig mit dem Ausgang des Tiefpaßfilters (LP) verbunden ist, und
   - mit einem Summierer (SUM), der eingangsseitig mit dem Ausgang der Funktionseinheit (FU) verbunden ist, dem zudem ein Wechselstromsignal zugeführt wird, und der ausgangsseitig mit dem Eingang der Digital-Analog-Wandlereinheit (DA) verbunden ist.

2. Schaltungsanordnung nach Anspruch 1, **dadurch gekennzeichnet, daß** bei Auftreten bestimmter Steuersignale aktuelle Zustandsvariable des digitalen Tiefpaßfilters (LP) in einer Speichereinheit (MM) abgelegt werden und in der Speichereinheit (MM) bereits abgelegte Zustandsvariable in das digitale Tiefpaßfilter (LP) geladen werden.

3. Schaltungsanordnung nach Anspruch 1 oder 2, **dadurch gekennzeichnet, daß** das digitale Tiefpaßfilter (LP), die digitale Funktionseinheit (FU) und weitere Schaltungsteile (SD, SUM, MM) in einen Mikroprozessor (MP) implementiert sind.

4. Schaltunganordnung nach einem der Ansprüche 1 bis 3, **gekennzeichnet durch** eine Funktionseinheit (FU), die bei kleinen Werten einer an der Teilnehmeranschlußleitung (a,b) anliegenden Leitungsspannung ($V_L$) einen in dieser fließenden Leitungsstrom ($I_L$) auf einen gegebenen maximalen Wert ($I_{LIM}$) begrenzt, die bei mittleren Werten der Leitungsspannung ($V_L$) das Verhalten einer Spannungsquelle mit gegebenem Innenwiderstand ($R_{DC}$) nach bildet und die bei hohen Werten der Leitungsspannung ($V_L$)

keinen Leitungsstrom ($I_L$) zuläßt.

5. Schaltungsanordnung nach einem der Ansprüche 1 bis 4,
**dadurch gekennzeichnet, daß** die Funktionseinheit (FU) einen Speicher (MEM) aufweist, an dessen Adreßleitungen (AL) die Eingangsgröße angelegt ist und an dessen Datenleitungen (DL) die entsprechend der vorgegebenen Abhängigkeit unter dieser Adresse im Speicher (MEM) abgelegte Ausgangsgröße anliegt.

6. Schaltungsanordnung nach einem der Ansprüche 1 bis 4,
**dadurch gekennzeichnet, daß** die Funktionseinheit (FU) eine digitale Recheneinheit (PU) aufweist, welche die Eingangsgröße mit die vorgegebene Abhängigkeit bestimmenden Parametern verknüpft und das Ergebnis der Verknüpfung als Ausgangsgröße ausgibt.

7. Schaltungsanordnung nach Anspruch 2,
**dadurch gekennzeichnet, daß** ein Austausch der Zustandsvariable des digitalen Tiefpaßfilters (LP) nur bei Änderung der vorgegebenen Abhängigkeit der Funktionseinheit (FU) vorgenommen wird.

8. Schaltungsanordnung nach einem der Ansprüche 1 bis 8,
**dadurch gekennzeichnet, daß** digitales Tiefpaßfilter (LP) und Funktionseinheit (FU) mit einer geringeren Abtastrate, betrieben werden, als zur Abrastung von auf der Teilnehmeranschlußleitung (a, b) auftretenden Sprachsignalen notwendig ist.

**Claims**

1. Circuit arrangement for supplying a subscriber line with a voltage ($V_L$),

    - having a digital/analogue converter unit (DA) whose output is coupled to the subscriber line (a, b),
    - having a current-measuring device (CM) for measuring the current ($I_L$) flowing in the subscriber line (a, b),
    - having an analogue/digital converter unit (AD) which is connected downstream of the current-measuring device (CM),
    - having a digital low-pass filter (LP) which is connected to the output of the analogue/digital converter unit (AD),
    - having a digital functional unit (FU) which uses an input variable derived from the measured current ($I_L$) to form, on the basis of a prescribed dependency, an output variable for defining the voltage ($V_L$), the input side of said functional unit (FU) being connected to the output of the low-pass filter (LP), and
    - having a summer (SUM) whose input side is connected to the output of the functional unit (FU) and which is additionally supplied with an AC signal and whose output side is connected to the input of the digital/analogue converter unit (DA).

2. Circuit arrangement according to Claim 1,
**characterized in that** the appearance of particular control signals prompts latest state variables for the digital low-pass filter (LP) to be stored in a memory unit (MM) and prompts state variables already stored in the memory unit (MM) to be loaded into the digital low-pass filter (LP).

3. Circuit arrangement according to Claim 1 or 2,
**characterized in that** the digital low-pass filter (LP), the digital functional unit (FU) and further circuit parts (SD, SUM, MM) are implemented in a microprocessor (MP).

4. Circuit arrangement according to one of Claims 1 to 3,
**characterized by** a functional unit (FU) which, for low values of a line voltage ($V_L$) present on the subscriber line (a, b), limits a line current ($I_L$) flowing therein to a given maximum value ($I_{LIM}$), which, for mid-range values of the line voltage ($V_L$), simulates the response of a voltage source with a given internal resistance ($R_{DC}$), and which, for high values of the line voltage ($V_L$), does not admit any line current ($I_L$).

5. Circuit arrangement according to one of Claims 1 to 4,
**characterized in that** the functional unit (FU) has a memory (MEM) to whose address lines (AL) the input variable is applied and to whose data lines (DL) the output variable stored in the memory (MEM) at this address on the basis of the prescribed dependency is applied.

6. Circuit arrangement according to one of Claims 1 to 4,
**characterized in that** the functional unit (FU) has a digital processing unit (PU) which logically combines the input variable with parameters determining the prescribed dependency and outputs the result of the logic operation as an output variable.

7. Circuit arrangement according to Claim 2,
**characterized in that** the state variables for the digital low-pass filter (LP) are interchanged only when the prescribed dependency of the functional unit (FU) changes.

8. Circuit arrangement according to one of Claims 1 to 8,
**characterized in that** the digital low-pass filter (LP) and the functional unit (FU) are operated at a lower sampling rate than is needed for sampling voice signals appearing on the subscriber line (a, b).

## Revendications

1. Montage pour l'alimentation d'une ligne d'abonné avec une tension ($V_L$), comportant

   - une unité formant convertisseur numérique/ analogique (DA), dont la sortie est couplée à la ligne d'abonné (a,b),
   - un dispositif ampèremétrique (CM) pour mesurer le courant ($I_L$) qui circule dans la ligne d'abonné (a,b),
   - une unité formant convertisseur analogique/ numérique (AD), qui est branchée en aval du dispositif ampèremétrique (CM),
   - un filtre passe-bas numérique (LP), qui est raccordé à la sortie de l'unité formant convertisseur analogique/numérique (AD),
   - une unité fonctionnelle numérique (FU), qui forme conformément à une relation de dépendance prédéterminée, à partir d'une grandeur d'entrée dérivée du courant mesuré ($I_L$), une grandeur de sortie servant à déterminer la tension ($V_L$), l'unité fonctionnelle (FU) étant reliée côté entrée à la sortie du filtre passe-bas (LP), et
   - un dispositif de sommation (SUM), qui est relié côté entrée à la sortie de l'unité fonctionnelle (FU) et auquel est envoyé un signal de courant alternatif et qui est relié, côté sortie, à l'entrée de l'unité formant convertisseur numérique/ analogique (DA).

2. Montage selon la revendication 1, **caractérisé en ce que** lors de l'apparition de certains signaux de commande, des variables actuelles d'état du filtre passe-bas numérique (LP) sont mémorisées dans une unité de mémoire (MM) et des variables d'état, déjà mémorisées dans l'unité de mémoire (MM), sont chargées dans le filtre passe-bas numérique (LP).

3. Montage selon la revendication 1 ou 2, **caractérisé en ce que** le filtre passe-bas numérique (LP), l'unité fonctionnelle numérique (FU) et d'autres éléments de circuit (SD, SUM, MM) sont réalisés dans un microprocesseur (MP).

4. Montage selon l'une des revendications 1 à 3, **caractérisé par** une unité fonctionnelle (FU),
qui, pour de faibles valeurs d'une tension de ligne ($V_L$) appliquée à la ligne d'abonné (a,b), limite un courant de ligne ($I_L$) circulant dans cette ligne, à une valeur maximale donnée ($I_{LIM}$),
qui, pour des valeurs moyennes de la tension de ligne ($V_L$), simule le comportement d'une source de tension présentant une résistance intérieure donnée ($R_{DC}$), et
qui, pour des valeurs élevées de la tension de ligne ($V_L$) n'autorise aucun courant de ligne ($I_L$).

5. Montage selon l'une des revendications 1 à 4, **caractérisé en ce que** l'unité fonctionnelle (FU) comporte une mémoire (MEM), aux lignes d'adresses (AL) de laquelle est appliquée la grandeur d'entrée et aux lignes de données (DL) de laquelle est appliquée la grandeur de sortie qui est mémorisée à cette adresse dans la mémoire (MEM), conformément à la dépendance prédéterminée.

6. Montage selon l'une des revendications 1 à 4, **caractérisé en ce que** l'unité fonctionnelle (FU) comporte une unité de calcul numérique (PU) qui combine la grandeur d'entrée selon la relation de dépendance prédéterminée de certains paramètres et délivre le résultat de la combinaison sous la forme d'une grandeur de sortie.

7. Montage selon la revendication 2, **caractérisé en ce qu'**un échange de la variable d'état du filtre passe-bas numérique (LP) est réalisé uniquement dans le cas d'une modification de la relation de dépendance prédéterminée de l'unité fonctionnelle (FU).

8. Montage selon l'une des revendications 1 à 8, **caractérisé en ce qu'**on fait fonctionner le filtre passe-bas numérique (LP) et l'unité fonctionnelle (FU) avec une cadence d'échantillonnage inférieure à celle qui est nécessaire pour l'échantillonnage de signaux vocaux, qui apparaissent dans la ligne d'abonné (a,b).

FIG 1

FIG 2

FIG 4

FIG 3